# EUROPEAN PATENT APPLICATION

(11) **EP 4 667 144 A1**
(43) Date of publication of application: **24.12.2025**
(21) Application number: 24182727.8
(22) Date of filing: 18.06.2024
(51) Int. Cl.: B23B 51/04, B28D 1/04

(54) **TOOL INSERT FOR CORE DRILLING WITH IMPROVED GUIDING**

(71) Applicant: Hilti Aktiengesellschaft, 9494 Schaan (LI)
(72) Inventor: Klein, Thorsten, 9436 Balgach (CH); Facskó, Erik, 6353 Dusnok (HU); Hoop, Matthaeus, 9492 Eschen (LI)
(74) Representative: Hilti Aktiengesellschaft Corporate Intellectual Property

(57) **Abstract**

A tool insert (30) for core drilling configured to be connected to a power tool performing an operation by rotating the tool insert about an axis of rotation (24), the tool insert comprising a connection end (31) configured to be connected to a tool fitting of the power tool, a drill shaft (32) having a shaft diameter (d_{shaft}), a plurality of drilling elements (33), which create during rotation about the axis of rotation (24) a borehole diameter (ds), and a guiding ring (34) having a ring diameter (d₁), wherein the ring diameter (d₁) of the guiding ring (34) is smaller than the borehole diameter (d_{B}) and larger than the shaft diameter (d_{shaft}) of the drill shaft (32).

## Description

The present invention relates to a tool insert for core drilling configured to be connected to a power tool according to the definition of claim 1.

### Background of the invention

Tool inserts for core drilling applications are formed as core bits and configured to be connected to a power tool. The power tool performs an operation in a workpiece by rotating the tool insert about an axis of rotation.

Core bits with smaller diameter are usually provided with a drill ring, whereas core bits with larger diameter are usually provided with a plurality of drilling elements arranged about the circumference. Both types of core bits generate a ring-shaped cut into a workpiece and cut a drilling core out of the workpiece. During core drilling, the outer surface of the drill ring or the outer surfaces of the drilling elements are gliding along the surface of the borehole and provide a guiding of the core bit. Due to wearout of the drill ring or the drilling elements the guiding performance of the core bit decreases during the lifetime of the core bit.

EP 0 477 253 B1 discloses a tool insert for core drilling formed as core drill and configured to be connected to a power tool performing an operation by rotating the tool insert about an axis of rotation. The tool insert comprises a connection end configured to be connected to a tool fitting of the power tool, a drill shaft having a shaft diameter, a drill ring or a plurality of drilling elements, which create during rotation about the axis of rotation a borehole diameter, and a guiding ring having a ring diameter. The guiding ring is arranged between the drill shaft and the drill ring or between the drill shaft and the drilling elements and is provided for guiding the core bit during core drilling. For guiding the core bit, the ring diameter of the guiding ring should be equal to the borehole diameter.

For core drilling of deep boreholes, EP 0 477 253 B1 discloses three options of core bits including a guiding ring. The guiding ring of the core bit is provided at its outer surface either with a plurality of axially extending guide lands or with at least one helically extending guide land, or the length of the guiding ring should be increased.

### Summary of the invention

Therefore, what is desired is a tool insert for core drilling that is provided for dry and wet drilling applications and for core drilling of deep boreholes with reduced unevenness of the borehole. The tool insert should preferably provide its performance over its lifetime.

These objectives are achieved by realizing the features of the independent claims. Features which further develop the invention in an advantageous manner are described in the dependent claims.

According to an aspect of the present invention, there is provided a tool insert for core drilling configured to be connected to a power tool performing an operation by rotating the tool insert about an axis of rotation, the tool insert comprising a connection end configured to be connected to a tool fitting of the power tool, a drill shaft having a shaft diameter, a drill ring or plurality of drilling elements, which define during rotation about the axis of rotation a borehole diameter, and a guiding ring having a ring diameter, characterized in that the ring diameter of the guiding ring is smaller than the borehole diameter and larger than the shaft diameter of the drill shaft.

During core drilling with a tool insert having a guiding ring with a ring diameter being smaller than the borehole diameter reduces the risk that the tool insert get stuck by rebar, or hard aggregates compared to a guiding ring which ring diameter is equal to the borehole diameter. Nevertheless, since the ring diameter of the guiding ring is larger than the shaft diameter of the drill shaft, the tool insert is guided during core drilling. The tool insert tends to grind towards the direction of lowest resistance. If rebar or hard aggregates get hit by the tool insert, the tool insert starts do grind to the side, which causes high side forces, and the borehole surface is getting uneven. This unevenness of the borehole surface causes a high part of side friction during the following core drilling.

In a preferred version, the tool insert further comprises a second guiding ring having a second ring diameter, wherein the second ring diameter is smaller than the borehole diameter and larger than the shaft diameter of the drill shaft. By using a tool insert with a guiding ring and a second guiding ring, the resistance of the tool insert against side grinding can be made sure for core drilling of deep boreholes. The second guiding ring can compensate the increasing instability and side friction of the tool insert the deeper the core drilling is.

Preferably, the second ring diameter of the second guiding ring is equal to the ring diameter of the guiding ring. By using a tool insert with two guiding rings (guiding ring and second guiding ring) having the same ring diameter (ring diameter and second ring diameter), the two guiding rings can act as two separate guiding surfaces which ensure stable conditions during core drilling.

Preferably, the tool insert further comprises a non-guiding section arranged between the guiding ring and the second guiding ring, wherein the non-guiding section has an outer diameter that is equal to the shaft diameter of the drill shaft. By using a tool insert with a non-guiding section arranged between the guiding ring and second guiding ring, the two guiding rings can act as two separate guiding surfaces which ensure stable conditions during core drilling.

Preferably, the non-guiding section has in a length direction, that is parallel to the axis of rotation, a length that is at least 1.0 times of the shaft diameter of the drill shaft. By using a tool insert with a non-guiding section arranged between the guiding ring and second guiding ring and having a length of at least 1.0 times of the shaft diameter of the drill shaft, the guiding ring and second guiding ring can act as two separate guiding surfaces which ensure stable conditions during core drilling.

During core drilling with a tool insert having a guiding ring and a second guiding ring, the length of the second guiding ring can be smaller than the length of the guiding ring because the forces on the second guiding ring are lower than the forces on the guiding ring.

In a preferred version, the tool insert further comprising a second guiding ring having a second ring diameter, wherein the second ring diameter is smaller than the borehole diameter and larger than the shaft diameter of the drill shaft, and a third guiding ring having a third ring diameter, wherein the third ring diameter is smaller than the borehole diameter and larger than the shaft diameter of the drill shaft. By using a tool insert with three guiding rings (guiding ring, second guiding ring and third guiding ring), the resistance of the tool insert against side grinding can be made sure for core drilling of deep boreholes. The second guiding ring and third guiding ring can compensate the increasing instability and side friction of the tool insert the deeper the core drilling is.

During core drilling with a tool insert having a guiding ring, a second guiding ring and a third guiding ring, the length of the second guiding ring can be smaller than the length of the guiding ring because the forces on the second guiding ring are lower than the forces on the guiding ring and the length of the third guiding ring can be smaller than the length of the second guiding ring because the forces on the third guiding ring are lower than the forces on the second guiding ring.

Preferably, the second ring diameter of the second guiding ring and the third ring diameter of the third guiding ring are equal to the ring diameter of the guiding ring. By using a tool insert with three guiding rings (guiding ring, second guiding ring, and third guiding ring) having the same ring diameter (ring diameter, second ring diameter and third ring diameter), the three guiding rings can act as three separate guiding surfaces which ensure stable conditions during core drilling.

Preferably, the tool insert further comprises a first non-guiding section arranged between the guiding ring and the second guiding ring, and a second non-guiding section arranged between the second guiding ring and the third guiding ring, wherein a first outer diameter of the first non-guiding section and a second outer diameter of the second non-guiding section are equal to the shaft diameter of the drill shaft. By using a tool insert with a first non-guiding section arranged between the guiding ring and second guiding ring and a second non-guiding section arranged between the second guiding ring and third guiding ring, the three guiding rings can act as three separate guiding surfaces which ensure stable conditions during core drilling.

Preferably, the first non-guiding section and the second non-guiding section have in a length direction, that is parallel to the axis of rotation, a first length that is larger than 1.0 times of the shaft diameter of the drill shaft respectively a second length that is larger than 1.0 times of the shaft diameter of the drill shaft. By using a tool insert with a first non-guiding section arranged between the guiding ring and second guiding ring and having a length of at least 1.0 times of the shaft diameter and with a second non-guiding section arranged between the second guiding ring and third guiding ring and having a length of at least 1.0 times of the shaft diameter, the guiding ring, second guiding ring and third guiding ring can act as three separate guiding surfaces which ensure stable conditions during core drilling.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIGS. 1A, B: show a power tool formed as core drill that is connected to a tool insert for core drilling in a connected state (FIG. 1A) and in an unconnected state (FIG. 1B) of the tool insert,
- FIG. 2: shows a first embodiment of a tool insert according to the present invention, the tool insert formed as one-part core bit including a guiding ring and a second guiding ring,
- FIGS. 3A, B: show the guiding ring (FIG. 3A) and second guiding ring (FIG. 3B) of the tool insert of FIG. 2 in detail,
- FIG. 4: shows a second embodiment of a tool insert according to the present invention, the tool insert formed as one-part core bit including a guiding ring, a second guiding ring and a third guiding ring,
- FIGS. 5A-C: show the guiding ring (FIG. 5A), second guiding ring (FIG. 5B) and third guiding ring (FIG. 5C) of the tool insert of FIG. 4 in detail,
- FIG. 6: shows a third embodiment of a tool insert according to the present invention, the tool insert formed as two-part core bit including a guiding ring and a second guiding ring, and
- FIGS. 7A, B: show the guiding ring (FIG. 7A) and second guiding ring (FIG. 7B) of the tool insert of FIG. 6 in detail.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

The term "power tool" refers to mains-operated (corded) power tools, battery-operated (cordless) power tools, and any other type of power tools, such as gas- or petrol-driven power tools, and the term "tool insert" refers to all types of tool inserts that are configured to be connected to a power tool.

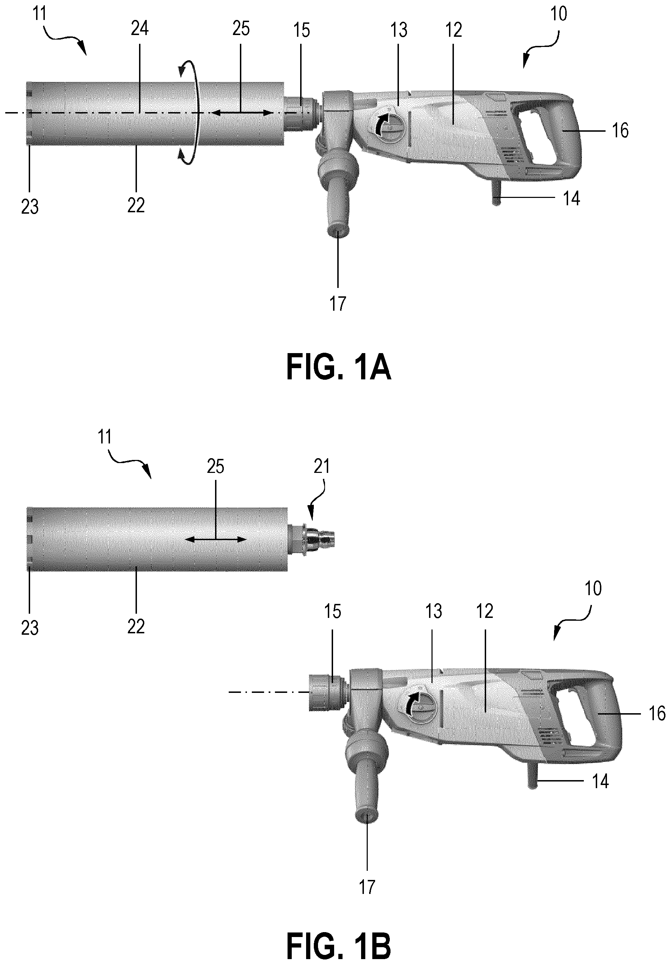

**FIGS. 1A****, B** show a power tool **10** and a tool insert **11** that is connected to the power tool 10. The power tool 10 is a core drill that is designed for core drilling applications (wet and dry drilling, hand-guided and rig-based drilling) of base materials, such as concrete, reinforced concrete, asphalt, and masonry. Typical core drilling applications are rig-based wet drilling in concrete for pipe penetrations, cable trays and ducts and for the installation of railings and barriers, hand-guided wet drilling for setting large-diameter anchors and reinforcing bars, and hand-guided dry drilling for pipe penetrations in plumbing, heating, and air conditioning installations and for chimney and store installations.

The core drill 10 includes a motor housing **12** with an electric motor (not shown), a gear housing **13** with a gear (not shown), a power cord **14** for powering the core drill, and a tool fitting **15.** In the exemplary version of FIG. 1, the core drill 10 is a corded power tool that is powered via the power cord 14 by a supply network or by a generator or transformer. Alternatively, the power tool 10 can be a cordless power tool that is powered by at least one battery pack.

For hand-guided core drilling applications, the core drill 10 must be held securely with both hands on defined handles, a main handle **16** and a side handle **17,** and for rig-based core drilling applications, the core drill 10 must be connected to a carriage of a drill stand. For wet drilling applications, the core drill 10 is provided to be used in combination with a water management devce that is connected via a port **18** to the core drill 10.

FIG. 1A shows the core drill 10 with the tool insert 11 connected to the power tool 10, and FIG. 1B shows in detail how the tool insert 11 can be connected to the core drill 10. The tool insert 11 is a two-part core bit including a connection end **21** configured to be connected to a tool fitting, such as the tool fitting 15 of the power tool 10, a drill shaft **22** having a shaft diameter, and a plurality of drilling elements **23** connected to the drill shaft 22.

In the exemplary version of FIG. 1, the connection end 21 is a two-part element including a first part connected to the drill shaft 22 and an adapter that is connected in a releasable manner via a threaded connection to the first part. The first part is a female part with a hexagonal inner cone, and the second part is an adapter including a male part with a hexagonal outer cone and a customized end, such as a BI plus or BL end. By using an adapter, the tool insert 11 can be connected to different types of power tools.

To generate a borehole in a workpiece or an underground, the tool insert 11 is rotated by the power tool 10 about an axis of rotation **24** and moved along a length direction **25** that is parallel to the axis of rotation 24. During rotating the tool insert 11 about the axis of rotation 24, the drilling elements 23 generate a ring-shaped cut and the diameter of that ring-shaped cut is defined as borehole diameter.

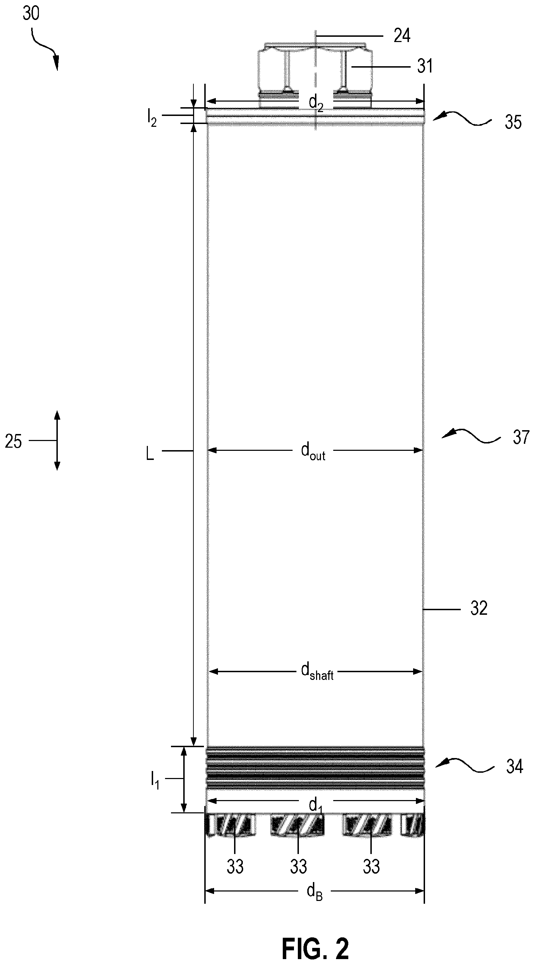

**FIG. 2** shows a first embodiment of a tool insert **30** according to the present invention configured to be connected to a power tool, such as the core drill 10 shown in FIGS. 1A, B. The tool insert 30 is formed as one-part core bit provided for core drilling and can substitute the tool insert 11 of the core drill 10.

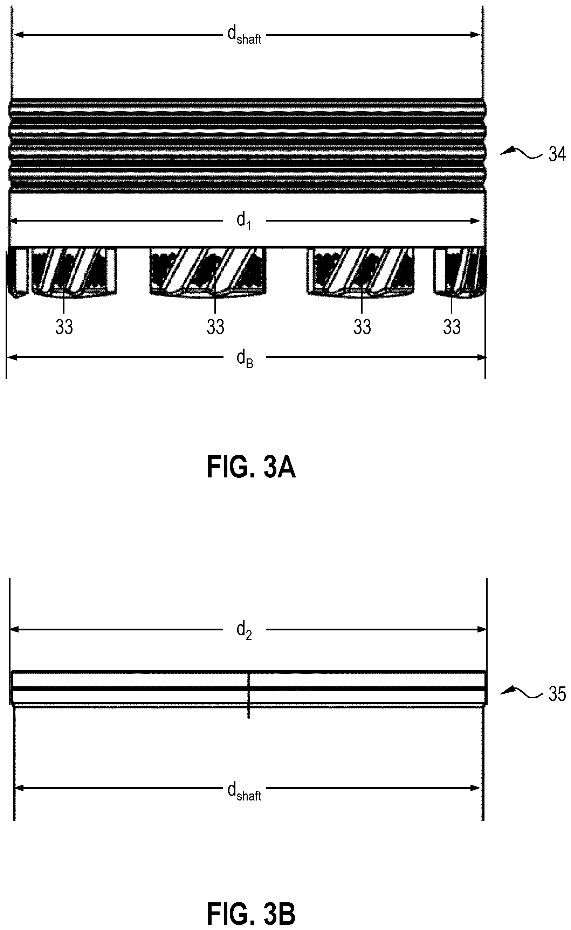

The tool insert 30 includes a connection end **31** configured to be connected (directly or by means of an adapter) to a tool fitting of a power tool, such as the tool fitting 15 of the core drill 10, a drill shaft **32** having a shaft diameter **d_{shaft}**, a plurality of drilling elements **33,** a guiding ring **34** having a ring diameter **d₁**, and a second guiding ring **35** having a second ring diameter **d₂**. **FIGS. 3A****, B** show the guiding ring 34 (FIG. 3A) and the second guiding ring 35 (FIG. 3B) in detail.

As shown in FIG. 2, the tool insert 30 further includes a non-guiding section **37** arranged between the guiding ring 34 and the second guiding ring 35, wherein the non-guiding section 37 has an outer diameter **dₒᵤₜ** that is equal to the shaft diameter d_{shaft} of the drill shaft 32.

The drilling elements 33 are connected to the guiding ring 34 in a releasable or non-releasable manner. During rotation of the tool insert 30 about the axis of rotation 24, the drilling elements 33 generate a ring-shaped cut in a workpiece and the diameter of that ring-shaped cut is defined as borehole diameter **d_{B}**.

The tool insert 30 according to the present invention is characterized in that the ring diameter d₁ of the guiding ring 34 is smaller than the borehole diameter d_{B} and larger than the shaft diameter d_{shaft}, and the second ring diameter d₂ of the second guiding ring 35 is smaller than the borehole diameter d_{B} and larger than the shaft diameter d_{shaft}.

Using the tool insert 30 with the guiding ring 34, which ring diameter d₁ is smaller than the borehole diameter d_{B}, reduces the risk that the tool insert 30 get stuck during core drilling by rebar, or hard aggregates compared to a tool insert having a guiding ring, which ring diameter is equal to the borehole diameter d_{B}. The gap between the borehole and the tool insert 30 allows a side movement of the tool insert 30 to reduce the risk that the tool insert 30 get stuck by rebar, or hard aggregates.

By using the tool insert 30 with two guiding rings (guiding ring 34 and second guiding ring 35), the resistance of the tool insert 30 against side grinding can be made sure for core drilling of deep boreholes; the second guiding ring 35 can compensate the increasing instability and side friction of the tool insert 30 the deeper the core drilling is. For core drilling of shorter boreholes, the second guiding ring 35 is an optional element and the tool insert 30 can be guided only by means of the guiding ring 34.

The guiding ring 34 and second guiding ring 35 have in the length direction 25, that is parallel to the axis of rotation 24, a length **l₁** respectively a second length **l₂**. Because the forces on the second guiding ring 35 are lower than the forces on the guiding ring 34 during core drilling, the second length I₂ of the second guiding ring 35 can be smaller than the length l₁ of the guiding ring 34.

The non-guiding section 37, which is arranged between the guiding ring 34 and the second guiding ring 35, has in the length direction 25 a length **L** that is larger than 1.0 times of the shaft diameter dₛₕₐₜₜ of the drill shaft 42. By using the tool insert 30 with the non-guiding section 37 having the length L of at least 1.0 times of the shaft diameter d_{shaft}, the guiding ring 34 and second guiding ring 35 can act as two separate guiding surfaces which ensure stable conditions during core drilling. The length L of the non-guiding section 37 will be adapted to the depth of the borehole and to the shaft diameter d_{shaft} of the drill shaft 52.

In the exemplary version of the tool insert 30, the second ring diameter d₂ of the second guiding ring 35 is equal to the ring diameter d₁ of the guiding ring 34. By using two guiding rings 34, 35 having the same ring diameter (ring diameter d₁ and second ring diameter d₂), the two guiding rings 34, 35 can act as two separate guiding surfaces which ensure stable guiding conditions during core drilling. The second guiding ring 35 can compensate the increasing instability and side friction of the tool insert 30 the deeper the core drilling is.

The guiding ring 34 shown in FIG. 3A is composed of a first part having a plane outer surface and a second part including several small rings that are stacked in a length direction of the tool insert 30, the length direction being parallel to the axis of rotation 24. The ring diameter d₁ of the guiding ring 34 is defined as diameter of a ring section that envelops the first and second part of the guiding ring 34.

The second guiding ring 35 shown in FIG. 3B is composed of a first ring-shaped part and a second plate-shaped part that is integrated into the end plate of the drill shaft. The second ring diameter d₂ of the second guiding ring 35 is defined as diameter of a ring section that envelops the first part and second part of the second guiding ring 35.

The tool insert 30 is a one-part core bit including a one-part drill shaft 32 and the drilling elements 33 are fixedly connected to the guiding ring 34. Alternatively, the tool insert may comprise a two-part drill shaft including a barrel and a change module that can be connected in a releasable manner to the barrel, and/or the drilling segments may be connected to the drill shaft in a releasable manner, such as screwing. Instead of drilling segments including abrasive particles, drilling elements including PCD (polycrystalline diamond) elements, or a drilling ring can be used.

In the exemplary version of FIG. 2, the drilling elements 33 are equi-angularly arranged at the circumference and connected to the guiding ring 34. Core bits with a larger shaft diameter are usually provided with a plurality of drilling elements; for core bits with smaller shaft diameter, usually drill rings are used. Instead of connecting the drilling elements 33 to the guiding ring 34, another non-guiding section can be arranged between the drilling elements 33 and the guiding ring 34 and the drilling elements 33 will be connected to the non-guiding section. Connecting the drilling elements 33 to the guiding ring 34 allows a larger connection area for the drilling elements 33 compared to a smaller connection area of a non-guiding section.

The concept of the tool insert 30 for core drilling according to the present invention can be used in combination with any type of drill shaft 32 (one-part, two-parts, or multi-parts), any connection end 31, any type of drilling element 33, and any type of connection between the drilling element 33 and the drill shaft 32 or the guiding ring 34.

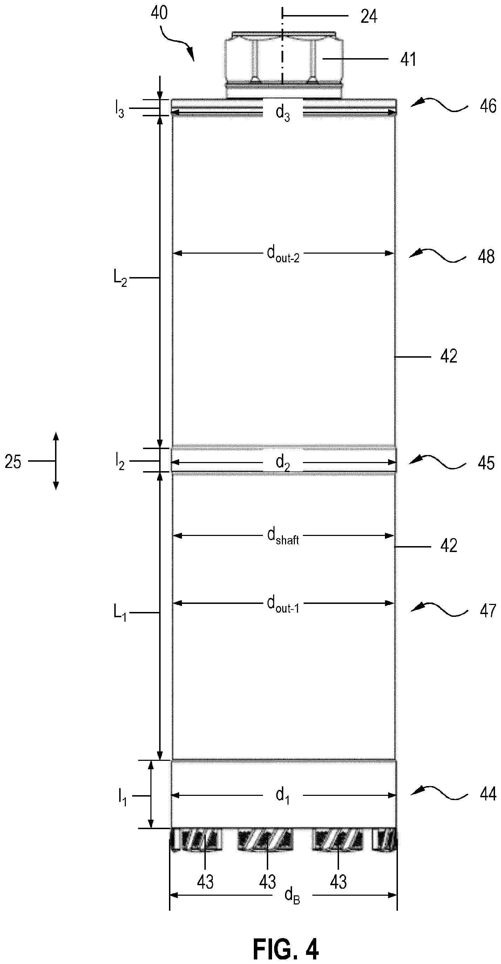

**FIG. 4** shows a second embodiment of a tool insert **40** according to the present invention configured to be connected to a power tool, such as the core drill 10 shown in FIGS. 1A, B. The tool insert 40 is formed as one-part core bit provided for core drilling and can substitute the tool insert 11 of the core drill 10.

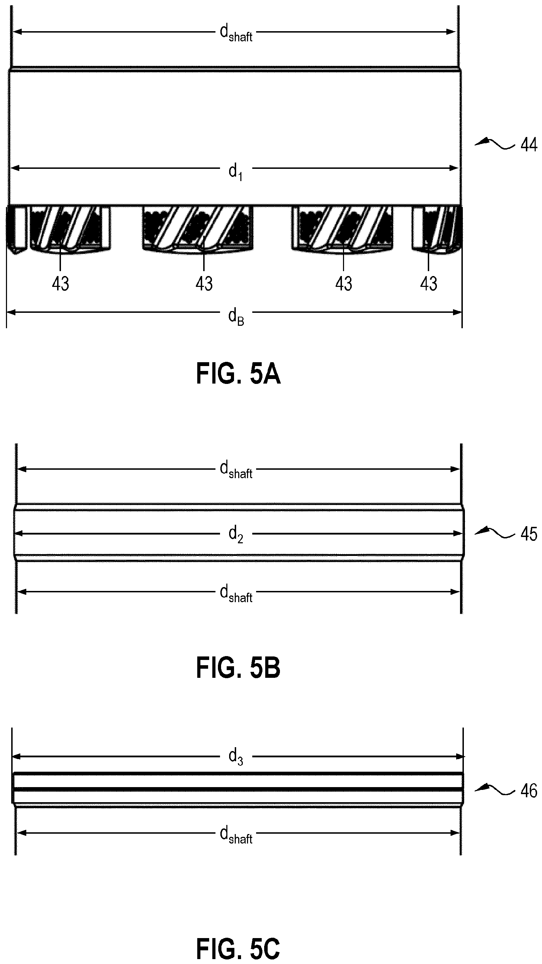

The tool insert 40 includes a connection end **41** configured to be connected (directly or by means of an adapter) to a tool fitting of a power tool, such as the tool fitting 15 of the core drill 10, a drill shaft **42** having a shaft diameter **d_{shaft}**, a plurality of drilling elements **43,** a guiding ring **44** having a ring diameter **d₁**, a second guiding ring **45** having a second ring diameter **d₂**, and a third guiding ring **46** having a third ring diameter **d₃.** FIGS. 5A-C show the guiding ring 44 (FIG. 5A), the second guiding ring 45 (FIG. 5B), and the third guiding ring 46 (FIG. 5C) in detail.

As shown in FIG. 4, the tool insert 40 further includes a first non-guiding section **47** arranged between the guiding ring 44 and the second guiding ring 45 and a second non-guiding section **48** arranged between the second guiding ring 45 and the third guiding ring 46, wherein a first outer diameter **dₒᵤₜ₋₁** of the first non-guiding section 47 and a second outer diameter **dₒᵤₜ₋₂** of the second non-guiding section 48 are equal to the shaft diameter d_{shaft} of the drill shaft 42.

The drilling elements 43 are connected to the guiding ring 44 in a releasable or non-releasable manner. During rotation of the tool insert 40 about the axis of rotation 24, the drilling elements 43 generate a ring-shaped cut in a workpiece and the diameter of that ring-shaped cut is defined as borehole diameter **d_{B}**.

The tool insert 30 according to the present invention is characterized in that the ring diameter d₁ of the guiding ring 44 is smaller than the borehole diameter d_{B} and larger than the shaft diameter d_{shaft}, the second ring diameter d₂ of the second guiding ring 45 is smaller than the borehole diameter d_{B} and larger than the shaft diameter d_{shaft}, and the third ring diameter d₃ of the third guiding ring 46 is smaller than the borehole diameter d_{B} and larger than the shaft diameter dₛₕₐₜₜ.

Using the tool insert 40 with the guiding ring 44, which ring diameter d₁ is smaller than the borehole diameter d_{B}, reduces the risk that the tool insert 40 get stuck during core drilling by rebar, or hard aggregates compared to a tool insert having a guiding ring, which ring diameter is equal to the borehole diameter d_{B}. The gap between the borehole and the tool insert 40 allows a side movement of the tool insert 40 to reduce the risk that the tool insert 40 get stuck by rebar, or hard aggregates.

By using the tool insert 40 with three guiding rings (guiding ring 44, second guiding ring 45 and third guiding ring 46), the resistance of the tool insert 40 against side grinding can be made sure for core drilling of deep boreholes; the second guiding ring 45 and third guiding ring 46 can compensate the increasing instability and side friction of the tool insert 40 the deeper the core drilling is. For core drilling of shorter boreholes, the third guiding ring 46 is an optional component and the tool insert 40 can be guided only by means of the guiding ring 44 and the second guiding ring 45.

The guiding ring 44 has in the length direction 25, that is parallel to the axis of rotation 24, a length **l₁**, the second guiding ring 45 a second length **l₂**, and the third guiding ring 46 a third length **l₃**. Because the forces on the second guiding ring 45 are lower than the forces on the guiding ring 44, the second length l₂ of the second guiding ring 45 can be smaller than the length l₁ of the guiding ring 44, and because the forces on the third guiding ring 46 are lower than the forces on the second guiding ring 45, the third length l₃ of the third guiding ring 46 can be smaller than the second length I₂ of the second guiding ring 45.

The first non-guiding section 47 and the second non-guiding section 48 have in the length direction 25, that is parallel to the axis of rotation 24, a first length L₁ that is larger than 1.0 times of the shaft diameter dₛₕₐₜₜ of the drill shaft 42 respectively a second length **L₂** that is larger than 1.0 times of the shaft diameter d_{shaft} of the drill shaft 42.

By using the tool insert 40 with the first non-guiding section 47 arranged between the guiding ring 44 and second guiding ring 45 and having a first length L₁ of at least 1.0 times of the shaft diameter d_{shaft} and with the second non-guiding section 48 arranged between the second guiding ring 45 and third guiding ring 46 and having a second length L₂ of at least 1.0 times of the shaft diameter d_{shaft}, the guiding ring 44, second guiding ring 45 and third guiding ring 46 can act as three separate guiding surfaces which ensure stable conditions during core drilling. The first length L₁ of the first non-guiding section 47 and the second length L₂ of the second non-guiding section 48 will be adapted to the depth of the borehole and to the shaft diameter dₛₕₐₜₜ of the drill shaft 42.

In the exemplary version of the tool insert 40, the third ring diameter d₃ of the third guiding ring 46 and the second ring diameter d₂ of the second guiding ring 45 are equal to the ring diameter d₁ of the guiding ring 44. By using three guiding rings (guiding ring 44, second guiding ring 45 and third guiding ring 46) having the same ring diameter (ring diameter d₁, second ring diameter d₂, and third ring diameter d₃), the resistance of the tool insert 40 against side grinding can be made sure for core drilling of deep boreholes. The second guiding ring 45 and third guiding ring 46 can compensate the increasing instability and side friction of the tool insert 40 the deeper the core drilling is.

In the exemplary version of FIG. 4, the guiding ring 44 is arranged between the drilling elements 43 and the drill shaft 42 and the third guiding ring 45 46 is arranged at the end plate of the drill shaft 42. Alternatively, another non-guiding section can be arranged between the drilling elements 43 and the guiding ring 44 and/or between the third guiding ring 46 and the end plate of the drill shaft 42. Instead of the plurality of drilling elements 43 that is equi-angularly arranged at the circumference, a drill ring can be used for core bits with a smaller shaft diameter dₛₕₐₜₜ of the drill shaft 42.

The concept of the tool insert 40 for core drilling according to the present invention can be used in combination with any type of drill shaft 42 (one-part, two-parts, or multi-parts), any connection end 41, any type of drilling element (plurality of drilling elements or drill ring), and any type of connection between the drilling element 43 and the drill shaft 42 or the guiding ring 44.

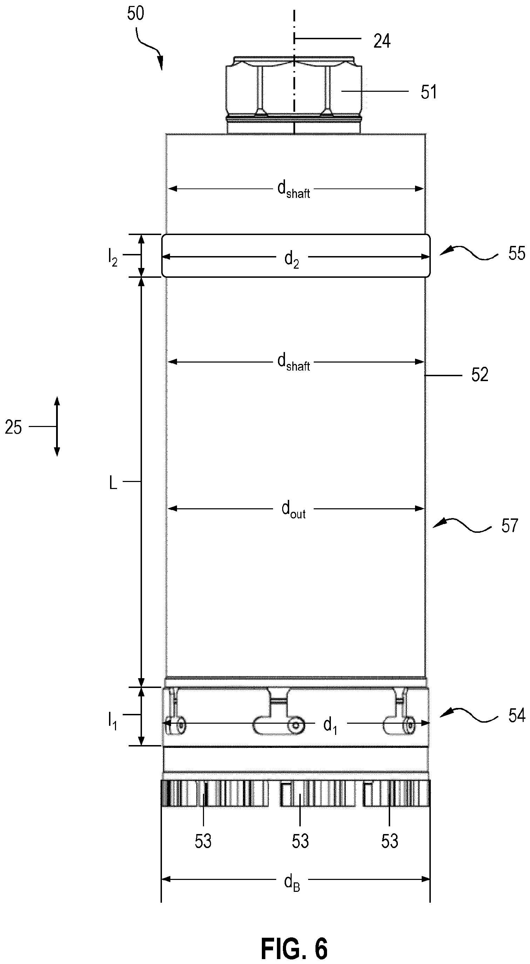

**FIG. 6** shows a third embodiment of a tool insert **50** according to the present invention configured to be connected to a power tool, such as the core drill 10 shown in FIGS. 1A, B. The tool insert 50 is formed as two-part core bit provided for core drilling and can substitute the tool insert 11 of the core drill 10.

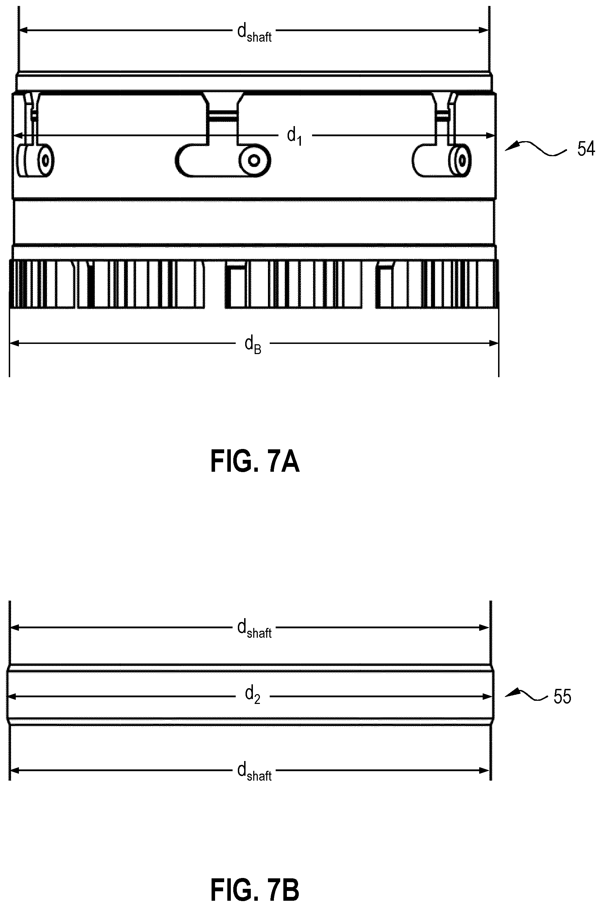

The tool insert 50 includes a connection end **51** configured to be connected to a tool fitting of a power tool, such as the tool fitting 15 of the core drill 10, a two-part drill shaft **52** having a shaft diameter **d_{shaft}**, a plurality of drilling elements **53,** a guiding ring **54** having a ring diameter **d₁**, and a second guiding ring **55** having a second ring diameter **d₂.** **FIGS. 7A****, B** show the guiding ring 54 (FIG. 7A) and the second guiding ring 55 (FIG. 7B) in detail.

As shown in FIG. 6, the tool insert 50 further includes a non-guiding section **57** arranged between the guiding ring 54 and the second guiding ring 55, wherein the non-guiding section 57 has an outer diameter **dₒᵤₜ** that is equal to the shaft diameter d_{shaft} of the drill shaft 52.

The drilling elements 53 are connected to the guiding ring 54 in a releasable or non-releasable manner. During rotation of the tool insert 50 about the axis of rotation 24, the drilling elements 53 generate a ring-shaped cut in a workpiece and the diameter of that ring-shaped cut is defined as borehole diameter **d_{B}**.

The tool insert 50 according to the present invention is characterized in that the ring diameter d₁ of the guiding ring 54 is smaller than the borehole diameter d_{B} and larger than the shaft diameter d_{shaft}, and the second ring diameter d₂ of the second guiding ring 55 is smaller than the borehole diameter d_{B} and larger than the shaft diameter d_{shaft}.

Using the tool insert 50 with the guiding ring 54, which ring diameter d₁ is smaller than the borehole diameter d_{B}, reduces the risk that the tool insert 50 get stuck during core drilling by rebar, or hard aggregates compared to a tool insert having a guiding ring, which ring diameter is equal to the borehole diameter d_{B}. The gap between the borehole and the tool insert 50 allows a side movement of the tool insert 50 to reduce the risk that the tool insert 30 get stuck by rebar, or hard aggregates.

By using the tool insert 50 with two guiding rings (guiding ring 54 and second guiding ring 55), the resistance of the tool insert 50 against side grinding can be made sure for core drilling of deep boreholes; the second guiding ring 55 can compensate the increasing instability and side friction of the tool insert 50 the deeper the core drilling is.

The guiding ring 54 and second guiding ring 55 have in the length direction 25, that is parallel to the axis of rotation 24, a length **l₁** respectively a second length **l₂**. Because the forces on the second guiding ring 55 are lower than the forces on the guiding ring 54 during core drilling, the second length I₂ of the second guiding ring 55 can be smaller than the length l₁ of the guiding ring 54.

The non-guiding section 57 has in the length direction 25, that is parallel to the axis of rotation 24, a length L that is larger than 1.0 times of the shaft diameter d_{shaft} of the drill shaft 52. By using the tool insert 50 with the non-guiding section 57 having a length of at least 1.0 times of the shaft diameter d_{shaft}, the guiding ring 54 and second guiding ring 55 can act as two separate guiding surfaces which ensure stable conditions during core drilling. The length L of the non-guiding section 57 will be adapted to the depth of the borehole and to the shaft diameter dₛₕₐₜₜ of the drill shaft 52.

In the exemplary version of the tool insert 50, the second ring diameter d₂ of the second guiding ring 55 is equal to the ring diameter d₁ of the guiding ring 54. By using two guiding rings 54, 55 having the same ring diameter (ring diameter d₁ and second ring diameter d₂), the two guiding rings 54, 55 can act as two separate guiding surfaces which ensure stable guiding conditions during core drilling. The second guiding ring 55 can compensate the increasing instability and side friction of the tool insert 50 the deeper the core drilling is.

In the exemplary version of the tool insert 50, the drill shaft 52 is divided in a first part and a second part, both connected via a releasable connection. The guiding ring 54 is integrated into the first part of the drill shaft 52 and the second guiding ring 55 is integrated into the second part of the drill shaft 52. The drilling elements 53 are not connected to the guiding ring 54 and the second guiding ring 55 is not arranged at the end plate of the drill shaft 52. Between the drilling elements 53 and the guiding ring 54 another non-guiding section is arranged and the drilling elements 53 are connected to that non-guiding section. The second guiding ring 55 is arranged with a distance to the end plate of the drill shaft 52. The position of the guiding rings 54, 55 will be adapted to the depth of the borehole and to the shaft diameter d_{shaft} of the drill shaft 52.

The concept of the tool insert 50 for core drilling according to the present invention can be used in combination with any type of drill shaft 52 (one-part, two-parts, or multi-parts), any connection end 51, any type of drilling element 53, and any type of connection between the drilling element 53 and the drill shaft 52 or the guiding ring 54.

## Claims

1. A tool insert (30; 40; 50) for core drilling configured to be connected to a power tool (10) performing an operation by rotating the tool insert about an axis of rotation (24), the tool insert comprising:
▪ a connection end (31; 41; 51) configured to be connected to a tool fitting (15) of the power tool (10),
▪ a drill shaft (32; 42; 52) having a shaft diameter (d_{shaft}),
▪ a drill ring or a plurality of drilling elements (33; 43; 53), which create during rotation about the axis of rotation (24) a borehole diameter (d_{B}), and
▪ a guiding ring (34; 44; 54) having a ring diameter (d₁),
**characterized in that** the ring diameter (d₁) of the guiding ring (34; 44; 54) is smaller than the borehole diameter (d_{B}) and larger than the shaft diameter (d_{shaft}) of the drill shaft (32; 42; 52).

2. The tool insert of claim 1, further comprising a second guiding ring (35; 45; 55) having a second ring diameter (d₂), wherein the second ring diameter (d₂) is smaller than the borehole diameter (d_{B}) and larger than the shaft diameter (d_{shaft}) of the drill shaft (32; 42; 52).

3. The tool insert of claim 2, wherein the second ring diameter (d₂) of the second guiding ring is equal to the ring diameter (d₁) of the guiding ring.

4. The tool insert of any one of claims 2 to 3, further comprising a non-guiding section (37; 57) arranged between the guiding ring (34; 54) and the second guiding ring (35; 55), wherein the non-guiding section (37; 57) has an outer diameter (dₒᵤₜ) that is equal to the shaft diameter (d_{shaft}) of the drill shaft (32; 52).

5. The tool insert of claim 4, wherein the non-guiding section (37; 57) has in a length direction (25), that is parallel to the axis of rotation (24), a length (L) that is at least 1.0 times of the shaft diameter (d_{shaft}) of the drill shaft (32; 52).

6. The tool insert of claim 1, further comprising a second guiding ring (45) having a second ring diameter (d₂), wherein the second ring diameter (d₂) is smaller than the borehole diameter (d_{B}) and larger than the shaft diameter (d_{shaft}) of the drill shaft (42), and further comprising a third guiding ring (46) having a third ring diameter (d₃), wherein the third ring diameter (d₃) is smaller than the borehole diameter (d_{B}) and larger than the shaft diameter (d_{shaft}) of the drill shaft (42).

7. The tool insert of claim 6, wherein the second ring diameter (d₂) of the second guiding ring (45) and the third ring diameter (d₃) of the third guiding ring (46) are equal to the ring diameter (d₁) of the guiding ring (44).

8. The tool insert of any one of claims 6 to 7, further comprising a first non-guiding section (47) arranged between the guiding ring (44) and the second guiding ring (45) and a second non-guiding section (48) arranged between the second guiding ring (45) and the third guiding ring (46), wherein a first outer diameter (dₒᵤₜ₋₁) of the first non-guiding section (47) and a second outer diameter (dₒᵤₜ₋₂) of the second non-guiding section (48) are equal to the shaft diameter (d_{shaft}) of the drill shaft (42).

9. The tool insert of claim 8, wherein the first non-guiding section (47) and the second non-guiding section (48) have in a length direction (25), that is parallel to the axis of rotation (24), a first length (L₁) that is larger than 1.0 times of the shaft diameter (d_{shaft}) of the drill shaft (42) respectively a second length (L₂) that is larger than 1.0 times of the shaft diameter (d_{shaft}) of the drill shaft (42).
